(19) Europäisches Patentamt
European Patent Office
Office européen des brevets

(11) **EP 3 795 705 A1**

(12) **EUROPEAN PATENT APPLICATION**
published in accordance with Art. 153(4) EPC

(43) Date of publication:
**24.03.2021 Bulletin 2021/12**

(21) Application number: **20810031.3**

(22) Date of filing: **15.04.2020**

(51) Int Cl.:
*C22C 1/08* $^{(2006.01)}$          *C22C 19/03* $^{(2006.01)}$
*C22C 19/07* $^{(2006.01)}$          *C25B 11/03* $^{(2021.01)}$
*H01M 8/0232* $^{(2016.01)}$          *H01M 8/0247* $^{(2016.01)}$

(86) International application number:
**PCT/JP2020/016533**

(87) International publication number:
**WO 2020/235265 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2019 JP 2019096107**

(71) Applicant: **SUMITOMO ELECTRIC INDUSTRIES, LTD.**
**Osaka-shi, Osaka 541-0041 (JP)**

(72) Inventors:
• **NUMATA, Koma**
  **Osaka-shi, Osaka 541-0041 (JP)**
• **MAJIMA, Masatoshi**
  **Osaka-shi, Osaka 541-0041 (JP)**
• **OGAWA, Mitsuyasu**
  **Osaka-shi, Osaka 541-0041 (JP)**
• **NODA, Yohei**
  **Osaka-shi, Osaka 541-0041 (JP)**

(74) Representative: **Boult Wade Tennant LLP**
**Salisbury Square House**
**8 Salisbury Square**
**London EC4Y 8AP (GB)**

(54) **POROUS BODY, FUEL CELL INCLUDING SAME, AND WATER-VAPOR ELECTROLYSIS APPARATUS INCLUDING SAME**

(57)     A porous body comprises a framework having a three-dimensional network structure, the framework having a body including nickel and cobalt as constituent elements, the body of the framework including the cobalt at a proportion in mass of 0.2 or more and 0.8 or less relative to a total mass of the nickel and the cobalt.

FIG.1

EP 3 795 705 A1

## Description

TECHNICAL FIELD

The present disclosure relates to a porous body, a fuel cell including the same, and a steam electrolysis apparatus including the same. The present application claims priority based on Japanese Patent Application No. 2019-096107 filed on May 22, 2019. The disclosure in the Japanese patent application is entirely incorporated herein by reference.

BACKGROUND ART

Conventionally, porous bodies such as porous metal bodies have a high porosity and hence a large surface area, and thus have been used in various applications such as battery electrodes, catalyst carriers, metal composite materials, and filters.

CITATION LIST

PATENT LITERATURE

PTL 1: Japanese Patent Laying-Open No. 11-154517
PTL 2: Japanese Patent Laying-Open No. 2012-132083
PTL 3: Japanese Patent Laying-Open No. 2012-149282

SUMMARY OF INVENTION

A porous body according to one aspect of the present disclosure comprises a framework having a three-dimensional network structure,
the framework having a body including nickel and cobalt as constituent elements,
the body of the framework including the cobalt at a proportion in mass of 0.2 or more and 0.8 or less relative to a total mass of the nickel and the cobalt.
A fuel cell according to one aspect of the present disclosure is a fuel cell including a current collector for an air electrode and a current collector for a hydrogen electrode, at least one of the current collector for the air electrode and the current collector for the hydrogen electrode including the porous body.
A steam electrolysis apparatus according to one aspect of the present disclosure is a steam electrolysis apparatus including a current collector for an air electrode and a current collector for a hydrogen electrode, at least one of the current collector for the air electrode and the current collector for the hydrogen electrode including the porous body.

BRIEF DESCRIPTION OF DRAWINGS

Fig. 1 is a schematic partial cross section generally showing a partial cross section of a framework of a porous body according to one embodiment of the present disclosure.
Fig. 2 is a cross section taken along a line A-A shown in Fig. 1.
Fig. 3A is an enlarged schematic diagram focusing on one cell in the porous body in order to illustrate a three-dimensional network structure of the porous body according to one embodiment of the present disclosure.
Fig. 3B is a schematic diagram showing an embodiment of a shape of the cell.
Fig. 4A is a schematic diagram showing another embodiment of the shape of the cell.
Fig. 4B is a schematic diagram showing still another embodiment of the shape of the cell.
Fig. 5 is a schematic diagram showing two cells joined together.
Fig. 6 is a schematic diagram showing four cells joined together.
Fig. 7 is a schematic diagram showing one embodiment of a three-dimensional network structure formed by a plurality of cells joined together.
Fig. 8 is a schematic cross section of a fuel cell according to an embodiment of the present disclosure.
Fig. 9 is a schematic cross section of a cell for a fuel cell according to an embodiment of the present disclosure.
Fig. 10 is a schematic cross section of a steam electrolysis apparatus according to an embodiment of the present disclosure.

Fig. 11 is a schematic cross section of a cell for the steam electrolysis apparatus according to an embodiment of the present disclosure.

## DETAILED DESCRIPTION

[Problem to be Solved by the Present Disclosure]

As such a method for producing a porous metal body, for example, Japanese Patent Laying-Open No. 11-154517 (PTL 1) discloses that after a treatment for imparting conductiveness to a foamed resin or the like, an electroplating layer made of metal is formed on the foamed resin, and the foamed resin is incinerated, as required, and thus removed to produce a porous metal body.

Furthermore, Japanese Patent Laying-Open No. 2012-132083 (PTL 2) discloses a porous metal body having a framework mainly composed of a nickel-tin alloy as a porous metal body having oxidation resistance and corrosion resistance as characteristics. Japanese Patent Laying-Open No. 2012-149282 (PTL 3) discloses a porous metal body having a framework mainly composed of a nickel-chromium alloy as a porous metal body having high corrosion resistance.

As described above, while various types of porous bodies such as a porous metal body are known, using this as a current collector for an electrode for a cell, a solid oxide fuel cell (SOFC) (for example, a current collector for an air electrode and a current collector for a hydrogen electrode), in particular, has room for further improvement.

The present disclosure has been made in view of the above circumstances, and contemplates a porous body having appropriate strength as a current collector for an air electrode of a fuel cell and a current collector for a hydrogen electrode of a fuel cell, a fuel cell including the same, and a steam electrolysis apparatus including the same.

[Advantageous Effect of the Present Disclosure]

According to the above, a porous body having appropriate strength as a current collector for an air electrode of a fuel cell and a current collector for a hydrogen electrode of a fuel cell, a fuel cell including the same, and a steam electrolysis apparatus including the same can be provided.

[Description of Embodiments of the Present Disclosure]

Initially, embodiments of the present disclosure will be listed and described.

[1] A porous body according to one aspect of the present disclosure comprises a framework having a three-dimensional network structure,

the framework having a body including nickel and cobalt as constituent elements,
the body of the framework including the cobalt at a proportion in mass of 0.2 or more and 0.8 or less relative to a total mass of the nickel and the cobalt. The porous body having such a feature can have appropriate strength as a current collector for an air electrode of a fuel cell and a current collector for a hydrogen electrode of a fuel cell.

[2] The body of the framework includes the cobalt at a proportion in mass exceeding 0.4 and less than 0.6 relative to the total mass of the nickel and the cobalt. The porous body having such a feature can have further appropriate strength as a current collector for an air electrode of a fuel cell and a current collector for a hydrogen electrode of a fuel cell.

[3] The body of the framework further includes at least one non-metallic element selected from the group consisting of nitrogen, sulfur, fluorine, and chlorine as a constituent element, and the non-metallic element is contained at a proportion of 5 ppm or more and 10,000 ppm or less in total with respect to the body of the framework. The porous body in this case ensures appropriate strength while the porous body maintains high conductivity in a high temperature environment.

[4] The body of the framework further includes phosphorus as a constituent element, and the phosphorus is contained at a proportion of 5 ppm or more and 50,000 ppm or less with respect to the body of the framework. The porous body in this case ensures appropriate strength while the porous body maintains high conductivity in a high temperature environment.

[5] The body of the framework further includes at least two non-metallic elements selected from the group consisting of nitrogen, sulfur, fluorine, chlorine and phosphorus as constituent elements, and the non-metallic elements are contained at a proportion of 5 ppm or more and 50,000 ppm or less in total with respect to the body of the framework. The porous body in this case ensures appropriate strength while the porous body maintains high conductivity in a high temperature environment.

[6] The body of the framework preferably further includes oxygen as a constituent element. Although this embodiment means that the porous body is oxidized as it is used, the porous body even in such a state can maintain high conductivity in a high temperature environment.

[7] The body of the framework preferably includes the oxygen in an amount of 0.1% by mass or more and 35% by mass or less. The porous body in this case can more effectively maintain high conductivity in a high temperature environment.

[8] The body of the framework preferably includes a spinel-type oxide. The porous body in this case can also more effectively maintain high conductivity in a high temperature environment.

[8] Preferably, when the body of the framework is observed in cross section at a magnification of 3,000 times to obtain an observed image, the observed image presents in any area 10 $\mu$m square thereof five or less voids each having a longer diameter of 1 $\mu$m or more. This allows sufficiently increased strength.

[10] The framework is preferably hollow. This allows the porous body to be lightweight and can also reduce an amount of metal required.

[11] The porous body preferably has a sheet-shaped external appearance and has a thickness of 0.2 mm or more and 2 mm or less. This allows a current collector for an air electrode and a current collector for a hydrogen electrode to be formed to be smaller in thickness than conventional, and can hence reduce an amount of metal required.

[12] A fuel cell according to one aspect of the present disclosure is a fuel cell including a current collector for an air electrode and a current collector for a hydrogen electrode, at least one of the current collector for the air electrode or the current collector for the hydrogen electrode including the porous body. A fuel cell having such a feature can maintain high conductivity in a high temperature environment and hence efficiently generate power.

[13] A steam electrolysis apparatus according to one aspect of the present disclosure is a steam electrolysis apparatus including a current collector for an air electrode and a current collector for a hydrogen electrode, at least one of the current collector for the air electrode or the current collector for the hydrogen electrode including the porous body. The steam electrolysis apparatus having such a feature allows electrolysis to be done with reduced resistance and steam to be electrolyzed efficiently.

[Detailed Description of Embodiments of the Present Disclosure]

Hereinafter, an embodiment of the present disclosure (hereinafter also referred to as "the present embodiment") will be described. It should be noted, however, that the present embodiment is not exclusive. In the present specification, an expression in the form of "A-B" means a range's upper and lower limits (that is, A or more and B or less), and when A is not accompanied by any unit and B is alone accompanied by a unit, A has the same unit as B.

<<Porous Body>>

A porous body according to the present embodiment is a porous body comprising a framework having a three-dimensional network structure. The framework has a body including nickel and cobalt as constituent elements. The body of the framework includes the cobalt at a proportion in mass of 0.2 or more and 0.8 or less relative to a total mass of the nickel and the cobalt. The porous body having such a feature can have appropriate strength as a current collector for an air electrode of a fuel cell and a current collector for a hydrogen electrode of a fuel cell. Herein, the "porous body" in the present embodiment for example includes a porous body made of a metal, a porous body made of an oxide of the metal, and a porous body including a metal and an oxide of the metal.

A porous body comprising a framework having a body including cobalt at a proportion of 0.2 or more in mass relative to a total mass of nickel and cobalt included in the body of the framework is high in strength, and even when it is deformed in stacking a SOFC, it tends to be less likely to cause fracture in the framework. When a porous body comprising a framework having a body including cobalt at a proportion of 0.8 or less in mass relative to a total mass of nickel and cobalt included in the body of the framework is used as a current collector for an air electrode or a current collector for a hydrogen electrode to manufacture a fuel cell, a solid electrolyte serving as a constituent member of the fuel cell tends to be less likely to fracture.

As a result of considering such circumstances as above, the present inventors have found for the first time that a porous body comprising a framework having a body including cobalt at a proportion of 0.2 or more and 0.8 or less in mass relative to a total mass of nickel and cobalt included in the body of the framework has appropriate strength as a current collector for an air electrode of a fuel cell and a current collector for a hydrogen electrode of a fuel cell.

The porous body can have an external appearance shaped in a variety of forms, such as a sheet, a rectangular parallelepiped, a sphere, and a cylinder. Inter alia, the porous body preferably has a sheet-shaped external appearance and has a thickness of 0.2 mm or more and 2 mm or less. The porous body more preferably has a thickness of 0.5 mm or more and 1 mm or less. The porous body having a thickness of 2 mm or less can be smaller in thickness than conventional, and can thus reduce the amount of metal required. The porous body having a thickness of 0.2 mm or more can have necessary strength. The thickness can be measured for example with a commercially available digital thickness gauge.

<Framework>

The porous body comprises a framework having a three-dimensional network structure, as has been discussed above. The framework has a body including nickel and cobalt as constituent elements. The body of the framework includes the cobalt at a proportion in mass of 0.2 or more and 0.8 or less relative to a total mass of the nickel and the cobalt.

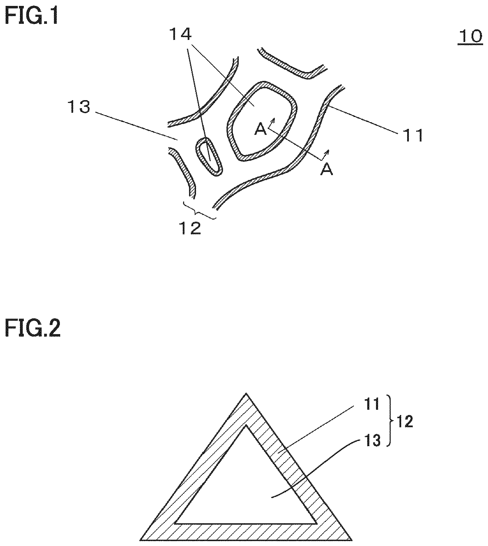

As shown in Fig. 1, the framework has a three-dimensional network structure having a pore 14. The three-dimensional network structure will more specifically be described hereinafter. A framework 12 is composed of a body 11 including nickel and cobalt as constituent elements (hereinafter also referred to as "framework body 11") and a hollow inner portion 13 surrounded by framework body 11. Framework body 11 forms a rib and a node, as will be described hereinafter. Thus, the framework is preferably hollow.

Furthermore, as shown in Fig. 2, framework 12 preferably has a triangular cross section orthogonal to its longitudinal direction. However, the cross section of framework 12 should not be limited thereto. The cross section of framework 12 may be a polygonal cross section other than a triangular cross section, such as a quadrangular or hexagonal cross section. Furthermore, framework 12 may have a circular cross section.

That is, preferably, framework 12 is such that inner portion 13 surrounded by framework body 11 has a hollow tubular shape, and framework 12 has a triangular or other polygonal, or circular cross section orthogonal to its longitudinal direction. Since framework 12 has a tubular shape, framework body 11 has an inner wall which forms an inner surface of the tube and an outer wall which forms an outer surface of the tube. Framework 12 having framework body 11 surrounding inner portion 13 that is hollow allows the porous body to be significantly lightweight. However, the framework is not limited to being hollow and may instead be solid. In this case, the porous body can be enhanced in strength.

The framework preferably includes nickel and cobalt such that they have a total apparent weight of 200 g/m$^2$ or more and 1,000 g/m$^2$ or less. The apparent weight is more preferably 250 g/m$^2$ or more and 900 g/m$^2$ or less. As will be described hereinafter, the apparent weight can be appropriately adjusted for example when nickel-cobalt alloy plating is applied on a conductive resin molded body having undergone a conductiveness imparting treatment. For example, when the porous body has an appearance in the form of a sheet, the apparent weight can be determined by the following formula:

$$\text{apparent weight (g/m}^2) = M \text{ (g) } /S \text{ (m}^2)$$

where

M: mass of framework [g], and
S: area of major surface of framework in appearance [m$^2$]

The total apparent weight of nickel and cobalt described above is converted into a mass per unit volume of the framework (or an apparent density of the framework), as follows: That is, the framework has an apparent density preferably of 0.14 g/cm$^3$ or more and 0.75 g/cm$^3$ or less, more preferably 0.18 g/cm$^3$ or more and 0.65 g/cm$^3$ or less. Herein, the "framework's apparent density" is defined by the following expression:

$$\text{Framework's apparent density (g/cm}^3) = M \text{ (g)}/V \text{ (cm}^3),$$

where

M: mass of framework [g], and
V: volume of shape of external appearance of framework [cm$^3$].

The framework has a porosity preferably of 40% or more and 98% or less, more preferably 45% or more and 98% or less, most preferably 50% or more and 98% or less. The framework having a porosity of 40% or more allows the porous body to be significantly lightweight and also have an increased surface area. The framework having a porosity of 98% or less allows the porous body to have sufficient strength.

The framework's porosity is defined by the following expression:

$$\text{Porosity (\%)} = [1 - \{M/(V \times d)\}] \times 100,$$

where

M: mass of framework [g],
V: volume of shape of external appearance of framework [$cm^3$], and
d: density of metal constituting framework [$g/cm^3$].

The framework preferably has an average pore diameter of 60 $\mu$m or more and 3,500 $\mu$m or less. The framework having an average pore diameter of 60 $\mu$m or more can enhance the porous body in strength. The framework having an average pore diameter of 3,500 $\mu$m or less can enhance the porous body in bendability (or bending workability). From these viewpoints, the framework has an average pore diameter more preferably of 60 $\mu$m or more and 1,000 $\mu$m or less, most preferably 100 $\mu$m or more and 850 $\mu$m or less.

The framework's average pore diameter can be determined in the following method: That is, initially, a microscope is used to observe a surface of the framework at a magnification of 3,000 times to obtain an observed image and at least 10 fields of view thereof are prepared, and subsequently, in each of the 10 fields of view, the number of pores is determined per 1 inch (25.4 mm = 25,400 $\mu$m) of a cell, which will be described hereinafter. Furthermore, the numbers of pores in these 10 fields of view are averaged to obtain an average value ($n_c$) which is in turn substituted into the following expression to calculate a numerical value, which is defined as the framework's average pore diameter:

$$\text{Average pore diameter (}\mu\text{m)} = 25,400 \ \mu\text{m}/n_c.$$

Note that herein the framework's porosity and average pore diameter are the same as the porous body's porosity and average pore diameter.

Preferably, when the body of the framework is observed in cross section at a magnification of 3,000 times to obtain an observed image, the observed image presents in any area 10 $\mu$m square thereof five or less voids each having a longer diameter of 1 $\mu$m or more. The number of voids is more preferably 3 or less. The porous body can thus sufficiently be enhanced in strength. Furthermore, it is understood that as the number of voids is 5 or less, the body of the framework is different from a formed body obtained by sintering fine powder. The lower limit of the number of voids observed is, for example, zero. Herein, the "number of voids" means an average in number of voids determined by observing each of a plurality of (e.g., 10) "areas 10 $\mu$m square" in a cross section of the framework body.

The framework can be observed in cross section by using an electron microscope. Specifically, it is preferable to obtain the "number of voids" by observing a cross section of the framework body in 10 fields of view. The cross section of the framework body may be a cross section orthogonal to the longitudinal direction of the framework or may be a cross section parallel to the longitudinal direction of the framework. In the observed image, a void can be distinguished from other parts by contrast in color (or difference in brightness). While the upper limit of the longer diameter of the void should not be limited, it is for example 10,000 $\mu$m.

The framework body preferably has an average thickness of 10 $\mu$m or more and 50 $\mu$m or less. Herein, "the framework body's thickness" means a shortest distance from an inner wall, or an interface with the hollow of the inner portion, of the framework to an outer wall located on an external side of the framework, and an average value thereof is defined as "the framework body's average thickness." The framework body's thickness can be determined by observing a cross section of the framework with an electron microscope.

Specifically, the framework body's average thickness can be determined in the following method: Initially, a sheet-shaped porous body is cut to expose a cross section of the framework body. One cross section cut is selected, and enlarged with an electron microscope at a magnification of 3,000 times and thus observed to obtain an observed image. Subsequently, a thickness of any one side of a polygon (e.g., the triangle shown in Fig. 2) forming one framework appearing in the observed image is measured at a center of that side, and defined as the framework body's thickness. Further, such a measurement is done for 10 observed images (or in 10 fields of view of image observed) to obtain the framework body's thickness at 10 points. Finally, the 10 points' average value is calculated to obtain the framework body's average thickness.

(Three-dimensional network structure)

The porous body comprises a framework having a three-dimensional network structure. In the present embodiment, a "three-dimensional network structure" means a structure in the form of a three-dimensional network. The three-dimensional network structure is formed by a framework. Hereinafter, the three-dimensional network structure will more specifically be described.

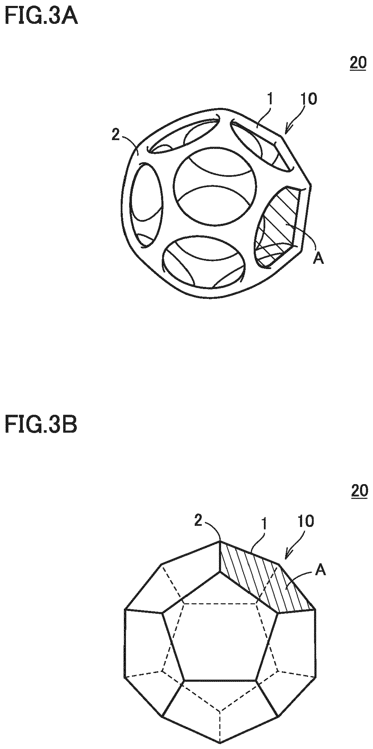

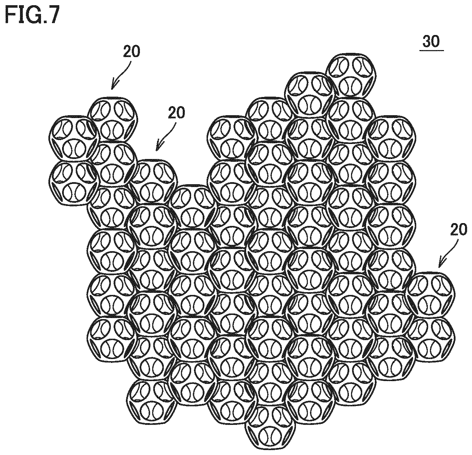

As shown in Fig. 7, a three-dimensional network structure 30 has a cell 20 as a basic unit, and is formed of a plurality of cells 20 joined together. As shown in Figs. 3A and 3B, cell 20 includes a rib 1 and a node 2 that connects a plurality of ribs 1. Although rib 1 and node 2 are described separately in terminology for the sake of convenience, there is no clear boundary therebetween. That is, a plurality of ribs 1 and a plurality of nodes 2 are integrated together to form cell 20, and cell 20 serves as a constituent unit to form three-dimensional network structure 30. Hereinafter, in order to facilitate understanding, the cell shown in Fig. 3A will be described as the regular dodecahedron shown in Fig. 3B.

Initially, a plurality of ribs 1 and a plurality of nodes 2 are present to form a frame 10 in the form of a planar polygonal structure. While Fig. 3B shows frame 10 having a polygonal structure that is a regular pentagon, frame 10 may be a polygon other than a regular pentagon, such as a triangle, a quadrangle, or a hexagon. Herein, the structure of frame 10 can also be understood such that a plurality of ribs 1 and a plurality of nodes 2 form a planar polygonal aperture. In the present embodiment, the planar polygonal aperture has a diameter, which means a diameter of a circle circumscribing the planar polygonal aperture defined by frame 10. A plurality of frames 10 are combined together to form cell 20 that is a three-dimensional, polyhedral structure. In doing so, one rib 1 and one node 2 are shared by a plurality of frames 10.

As shown in the schematic diagram of Fig. 2 described above, rib 1 preferably has, but is not limited to, a hollow tubular shape and has a triangular cross section. Rib 1 may have a polygonal cross section other than a triangular cross section, such as a quadrangular or hexagonal cross section, or a circular cross section. Node 2 may be shaped to have a vertex to have a sharp edge, the vertex chamfered to have a planar shape, or the vertex rounded to have a curved shape.

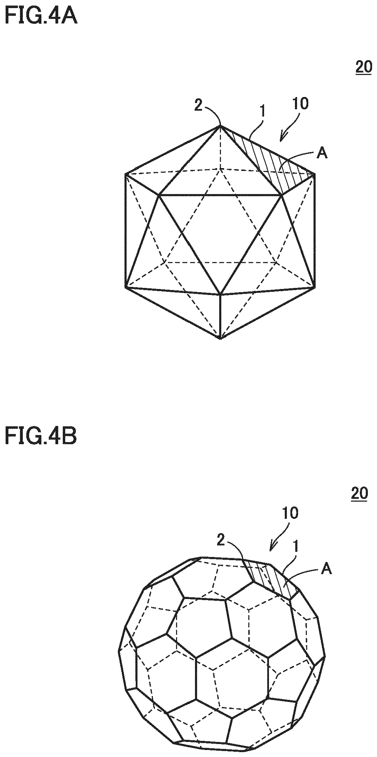

While the polyhedral structure of cell 20 is a dodecahedron in Fig. 3B, it may be other polyhedrons such as a cube, an icosahedron (see Fig. 4A), and a truncated icosahedron (see Fig. 4B). Herein, the structure of cell 20 can also be understood as forming a three-dimensional space (i.e., pore 14) surrounded by a virtual plane A defined by each of a plurality of frame 10. In the present embodiment, it can be understood that the three-dimensional space has a pore with a diameter (hereinafter also referred to as a "pore diameter") which is a diameter of a sphere circumscribing the three-dimensional space defined by cell 20. Note, however, that in the present embodiment the porous body's pore diameter is calculated based on the above-described calculation formula for the sake of convenience. That is, the diameter of the pore (or the pore diameter) of the three-dimensional space defined by cell 20 refers to what is the same as the framework's porosity and average pore diameter.

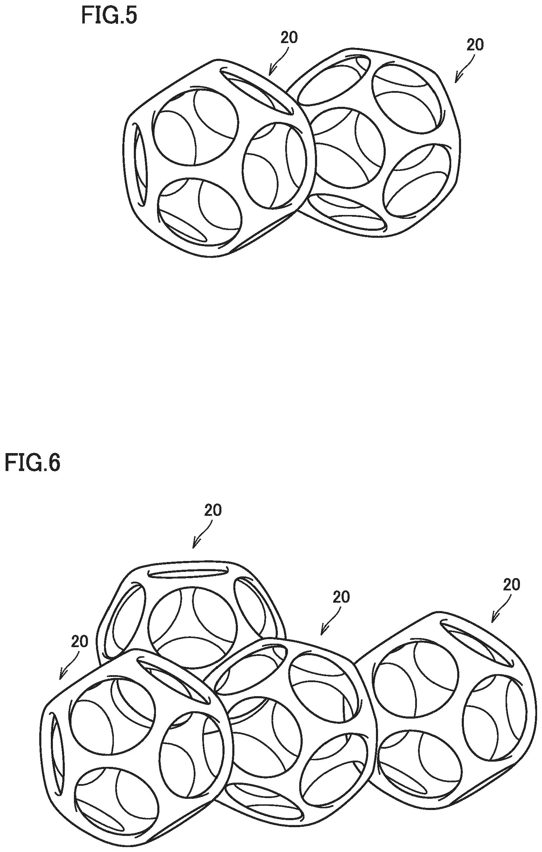

A plurality of cells 20 are combined together to form three-dimensional network structure 30 (see Figs. 5 to 7). In doing so, frame 10 is shared by two cells 20. Three-dimensional network structure 30 can also be understood to include frame 10 and can also be understood to include cell 20.

As has been described above, the porous body has a three-dimensional network structure that forms a planar polygonal aperture (or a frame) and a three-dimensional space (or a cell). Therefore, it can be clearly distinguished from a two-dimensional network structure only having a planar aperture (e.g., a punched metal, a mesh, etc.). Furthermore, the porous body has a plurality of ribs and a plurality of nodes integrally forming a three-dimensional network structure, and can thus be clearly distinguished from a structure such as non-woven fabric formed by intertwining fibers serving as constituent units. The porous body having such a three-dimensional network structure can have continuous pores.

In the present embodiment, the three-dimensional network structure is not limited to the above-described structure. For example, the cell may be formed of a plurality of frames each having a different size and a different planar shape. Furthermore, the three-dimensional network structure may be formed of a plurality of cells each having a different size and a different three-dimensional shape. The three-dimensional network structure may partially include a frame without having a planar polygonal aperture therein or may partially include a cell without having a three-dimensional space therein (or a cell having a solid interior).

(Nickel and Cobalt)

The framework has a body including nickel and cobalt as constituent elements, as has been discussed above. The body of the framework body does not exclude including a third component other than nickel and cobalt unless the third component affects the presently disclosed porous body's function and effect. However, the body of the framework preferably includes the above two components (nickel and cobalt) as a metal component. Specifically, the body of the framework preferably includes a nickel-cobalt alloy composed of nickel and cobalt. In particular, the nickel-cobalt alloy is preferably a major component of the body of the framework. Herein, a "major component" of the body of the framework refers to a component having the largest proportion in mass in the body of the framework. More specifically, when the body of the framework contains a component at a proportion in mass exceeding 50% by mass, the component is referred to as a major component of the body of the framework.

The body of the framework preferably contains nickel and cobalt at a proportion of 80% by mass or more, more preferably 90% by mass or more, most preferably 95% by mass or more in total for example before the porous body is used as a current collector for an air electrode for an SOFC or a current collector for a hydrogen electrode for the SOFC, that is, before the porous body is exposed to a high temperature of 700°C or higher. The body of the framework may contain nickel and cobalt at a proportion of 100% by mass in total. When the body of the framework contains nickel and cobalt at a proportion of 100% by mass in total, the body of the framework has a composition which can be represented by a chemical formula of $Ni_{1-n}Co_n$, where $0.2 \leq n \leq 0.8$.

When a porous body comprising a framework having a body containing nickel and cobalt at a higher proportion in total is used as a current collector for an air electrode for an SOFC or a current collector for a hydrogen electrode for the SOFC, a proportion of a generated oxide being a spinel-type oxide composed of nickel and/or cobalt and oxygen, tends to increase. Thus, the porous body can maintain high conductivity even when used in a high temperature environment.

(Proportion in mass of cobalt relative to total mass of nickel and cobalt)

The body of the framework includes cobalt at a proportion in mass of 0.2 or more and 0.8 or less relative to a total mass of nickel and cobalt. When a porous body comprising a framework having such a composition is used as a current collector for an air electrode or a hydrogen electrode of an SOFC or the like, a spinel-type oxide represented by a chemical formula of $Ni_{3-x}Co_xO_4$, where $0.6 \leq x \leq 2.4$, typically $NiCo_2O_4$ or $Ni_2CoO_4$, is generated in the framework by oxidation. As the framework body is oxidized, a spinel-type oxide represented by the chemical formula of $CoCo_2O_4$ may also be generated. The spinel-type oxide exhibits high conductivity, and the porous body can hence maintain high conductivity even when the framework body is entirely oxidized as the porous body is used in a high temperature environment.

The body of the framework preferably includes the cobalt at a proportion in mass exceeding 0.4 and less than 0.6 relative to the total mass of the nickel and the cobalt. The porous body comprising a framework having a body including cobalt at a proportion exceeding 0.4 and less than 0.6 in mass relative to the total mass of nickel and cobalt is further higher in strength, and even when it is deformed in stacking a SOFC, it tends to be further less likely to cause fracture in the body of the framework. When the porous body comprising a framework having a body including cobalt at a proportion exceeding 0.4 and less than 0.6 in mass relative to the total mass of nickel and cobalt is used as a current collector for an air electrode or a current collector for a hydrogen electrode to manufacture a fuel cell, a solid electrolyte that is a constituent member of the fuel cell tends to be less likely to fracture.

(Oxygen)

The body of the framework preferably further includes oxygen as a constituent element. Specifically, the body of the framework more preferably includes oxygen in an amount of 0.1% by mass or more and 35% by mass or less. The oxygen in the framework body can be detected, for example, after the porous body is used as a current collector for an air electrode or a hydrogen electrode of an SOFC. That is, preferably, after the porous body is exposed to a temperature of 700°C or higher, the body of the framework includes oxygen in an amount of 0.1% by mass or more and 35% by mass or less. More preferably, the body of the framework includes oxygen in an amount of 10 to 30% by mass, still more preferably 25 to 28% by mass.

When the body of the framework includes oxygen as a constituent element in an amount of 0.1% by mass or more and 35% by mass or less, a thermal history that the porous body has been exposed to a high temperature of 700°C or higher can be inferred. Furthermore, when the porous body is used as a current collector for an air electrode or a hydrogen electrode of an SOFC or the like and thus exposed to a high temperature of 700°C or higher, and a spinel-type oxide composed of nickel and/or cobalt and oxygen is generated in the framework, the body of the framework tends to include oxygen as a constituent element in an amount of 0.1% by mass or more and 35% by mass or less.

That is, the body of the framework preferably includes a spinel-type oxide. Thus, the porous body can maintain high conductivity more effectively even when it is oxidized. When the body of the framework contains oxygen at a proportion departing the above range, the porous body tends to fail to obtain an ability as desired to maintain high conductivity more effectively when it is oxidized.

(Third component)

The body of the framework can include a third component as a constituent element insofar as it does not affect a function and effect that the presently disclosed porous body has. The framework may include as the third component for example silicon, magnesium, carbon, tin, aluminum, sodium, iron, tungsten, titanium, phosphorus, boron, silver, gold, chromium, molybdenum, nitrogen, sulfur, fluorine and chlorine. These components may be included, for example, as unavoidable impurities that are unavoidably introduced in a manufacturing method described hereinafter. For example, examples of unavoidable impurities include elements included in a conductive coating layer formed by a conductiveness imparting treatment described hereinafter. Further, the body of the framework may include oxygen as the third component in a state before the porous body is used as a current collector for an air electrode for an SOFC or a current collector for a hydrogen electrode for the SOFC. The framework body preferably includes the third component individually in an amount of 5% by mass or less, and such third components together in an amount of 10% by mass or less.

In one aspect of the present embodiment, the body of the framework may further include at least one non-metallic element selected from the group consisting of nitrogen, sulfur, fluorine, and chlorine as a constituent element. The non-metallic element may be contained at a proportion of 5 ppm or more and 10,000 ppm or less in total with respect to the body of the framework. Preferably, the non-metallic element is contained at a proportion of 10 ppm or more and 8,000 ppm or less in total with respect to the body of the framework.

Further, the body of the framework may further include phosphorus as a constituent element. The phosphorus may be contained at a proportion of 5 ppm or more and 50,000 ppm or less with respect to the body of the framework. Preferably, the phosphorus is contained at a proportion of 10 ppm or more and 40,000 ppm or less with respect to the body of the framework.

In another aspect of the present embodiment, the body of the framework may further include at least two non-metallic elements selected from the group consisting of nitrogen, sulfur, fluorine, chlorine, and phosphorus as constituent elements. The non-metallic element may be contained at a proportion of 5 ppm or more and 50,000 ppm or less in total with respect to the body of the framework. Preferably, the non-metallic element is contained at a proportion of 10 ppm or more and 10,000 ppm or less in total with respect to the body of the framework.

When the porous body is used as a current collector for an air electrode or a hydrogen electrode of a SOFC, it is exposed to a high environmental temperature of 700°C or higher, as has been set forth above. However, the body of the framework includes the above-described non-metallic element as a constituent element, and the porous body can maintain appropriate strength.

(Method for measuring a proportion of each element contained)

The proportion of each element (e.g., oxygen) contained in the body of the framework (in % by mass) can be determined as follows: an image of a cross section of the framework cut, as observed through a scanning electron microscope (SEM), can be analyzed with an EDX device accompanying the SEM (for example, an SEM part: trade name "SUPRA35VP" manufactured by Carl Zeiss Microscopy Co., Ltd., and an EDX part: trade name "octane super" manufactured by AMETEK, Inc.) to determine the proportion in mass of each element contained in the body of the framework. The EDX device can also be used to determine a proportion of nickel and cobalt contained in the body of the framework. Specifically, based on the atomic concentration of each element detected by the EDX device, oxygen, nickel and cobalt in % by mass, mass ratio, and the like in the body of the framework can be determined. Further, whether the body of the framework has a spinel-type oxide composed of nickel and/or cobalt and oxygen can be determined by exposing the cross section to an X-ray and analyzing its diffraction pattern, i.e., by X-ray diffractometry (XRD).

For example, whether the body of the framework has a spinel-type oxide can be determined using a measurement device such as an X-ray diffractometer (for example, trade name (model number): "Empyrean" manufactured by Spectris, and analysis software: "integrated X-ray powder diffraction software PDXL"). The measurement may be done for example under the following conditions:

(Measurement conditions)

X-ray diffractometry: $\theta$-$2\theta$ method
Measuring system: collimated beam optical mirror
Scan range ($2\theta$): 10° to 90°
cumulative time: 1 second/step
step: 0.03°.

«Fuel Cell»

A fuel cell according to the present embodiment is a fuel cell comprising a current collector for an air electrode and a current collector for a hydrogen electrode. At least one of the current collector for the air electrode and the current collector for the hydrogen electrode includes the porous body. The current collector for the air electrode or the current collector for the hydrogen electrode includes a porous body having appropriate strength as a current collector for a fuel cell, as described above. The current collector for the air electrode or the current collector for the hydrogen electrode is thus suitable as at least one of a current collector for an air electrode of an SOFC or a current collector for a hydrogen electrode of the SOFC. For the fuel cell, it is more suitable to use the porous body as the current collector for the air electrode as the porous body includes nickel and cobalt.

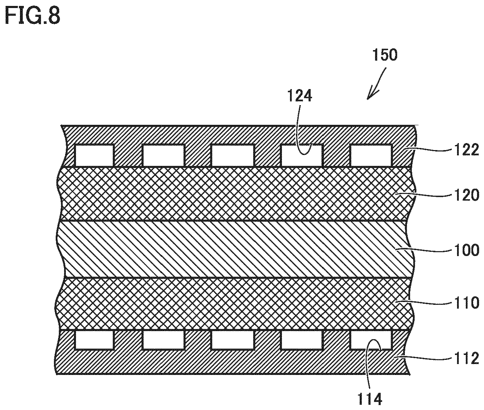

Fig. 8 is a schematic cross section of a fuel cell according to an embodiment of the present disclosure. A fuel cell 150 comprises a current collector 110 for a hydrogen electrode, a current collector 120 for an air electrode, and a cell 100 for the fuel cell. Cell 100 for the fuel cell is provided between current collector 110 for the hydrogen electrode and current collector 120 for the air electrode. Herein a "current collector for a hydrogen electrode" means a current collector on a side in a fuel cell that supplies hydrogen. A "current collector for an air electrode" means a current collector on a side in the fuel cell that supplies a gas (e.g., air) containing oxygen.

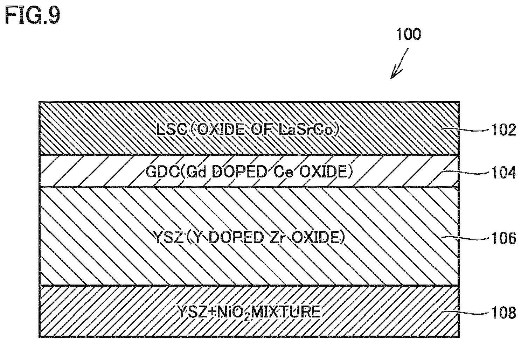

Fig. 9 is a schematic cross section of a cell for a fuel cell according to an embodiment of the present disclosure. Cell 100 for the fuel cell includes an air electrode 102, a hydrogen electrode 108, an electrolyte layer 106 provided between air electrode 102 and hydrogen electrode 108, and an intermediate layer 104 provided between electrolyte layer 106 and air electrode 102 to prevent a reaction therebetween. As the air electrode, for example, an oxide of LaSrCo (LSC) is used. As the electrolyte layer, for example, an oxide of Zr doped with Y (YSZ) is used. As the intermediate layer, for example, an oxide of Ce doped with Gd (GDC) is used. As the hydrogen electrode, for example, a mixture of YSZ and $NiO_2$ is used.

Fuel cell 150 further comprises a first interconnector 112 having a fuel channel 114 and a second interconnector 122 having an oxidant channel 124. Fuel channel 114 is a channel for supplying fuel (for example, hydrogen) to hydrogen electrode 108. Fuel channel 114 is provided on a major surface of first interconnector 112 that faces current collector 110 for the hydrogen electrode. Oxidant channel 124 is a channel for supplying an oxidant (for example, oxygen) to air electrode 102. Oxidant channel 124 is provided on a major surface of second interconnector 122 that faces current collector 120 for the air electrode.

<<Steam Electrolysis Apparatus>>

A steam electrolysis apparatus according to the present embodiment is a steam electrolysis apparatus comprising a current collector for an air electrode and a current collector for a hydrogen electrode and having a structure similar to that of the above fuel cell. At least one of the current collector for the air electrode and the current collector for the hydrogen electrode includes the porous body. The current collector for the air electrode or the current collector for the hydrogen electrode includes a porous body having appropriate strength as a current collector for a steam electrolysis apparatus, as described above. The current collector for the air electrode or the current collector for the hydrogen electrode is thus suitable as at least one of a current collector for an air electrode of a steam electrolysis apparatus or a current collector for a hydrogen electrode of the steam electrolysis apparatus. For the steam electrolysis apparatus, it is more suitable to use the porous body as the current collector for the air electrode as the porous body includes nickel and cobalt, and as one example thereof, resistance and hence electrolytic voltage are effectively reduced.

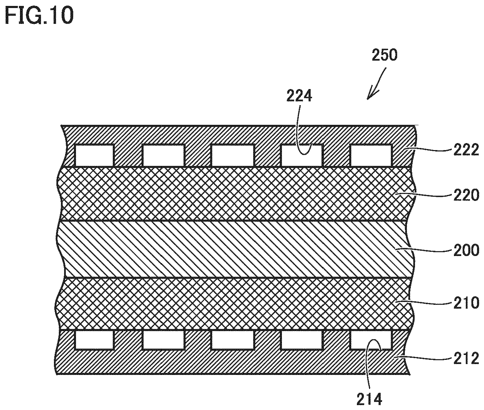

Fig. 10 is a schematic cross section of a steam electrolysis apparatus according to an embodiment of the present disclosure. A steam electrolysis apparatus 250 comprises a current collector 210 for a hydrogen electrode, a current collector 220 for an air electrode, and a cell 200 for the steam electrolysis apparatus. Cell 200 for the steam electrolysis apparatus is provided between current collector 210 for the hydrogen electrode and current collector 220 for the air electrode. Herein a "current collector for a hydrogen electrode" means a current collector on a side in a steam electrolysis apparatus that generates hydrogen. A "current collector for an air electrode" means a current collector on a side in the steam electrolysis apparatus that supplies a steam-containing gas (e.g., humidified air). The current collector for the air electrode can also be understood to be a current collector on a side in a steam electrolysis apparatus that generates oxygen. Furthermore, in one aspect of the present embodiment, the steam-containing gas may be supplied from the side of the current collector for the hydrogen electrode.

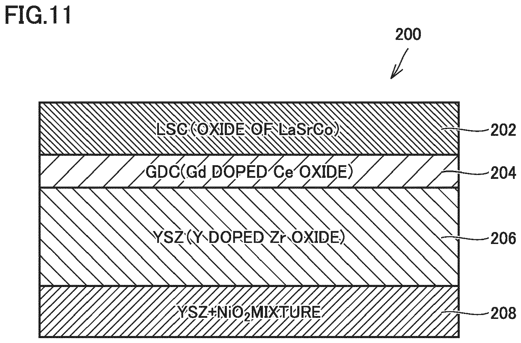

Fig. 11 is a schematic cross section of a cell for the steam electrolysis apparatus according one aspect of the present disclosure. Cell 200 for the steam electrolysis apparatus comprises an air electrode 202, a hydrogen electrode 208, an electrolyte layer 206 provided between air electrode 202 and hydrogen electrode 208, and an intermediate layer 204 provided between electrolyte layer 206 and air electrode 202 to prevent a reaction therebetween. As the air electrode, for example, an oxide of LaSrCo (LSC) is used. As the electrolyte layer, for example, an oxide of Zr doped with Y (YSZ) is used. As the intermediate layer, for example, an oxide of Ce doped with Gd (GDC) is used. As the hydrogen electrode, for example, a mixture of YSZ and $NiO_2$ is used.

Steam electrolysis apparatus 250 further comprises a first interconnector 212 having a hydrogen channel 214 and a second interconnector 222 having a steam channel 224. Hydrogen channel 214 is a channel for recovering hydrogen from hydrogen electrode 208. Hydrogen channel 214 is provided on a major surface of first interconnector 212 that faces current collector 210 for the hydrogen electrode. Steam channel 224 is a channel for supplying steam (e.g., humidified air) to air electrode 202. Steam channel 224 is provided on a major surface of second interconnector 222 that faces current collector 220 for the air electrode.

<<Method for producing porous body>>

The porous body according to the present embodiment can be produced by appropriately using a conventionally known method. For this reason, while the method for producing the porous body should not be specifically limited, preferably, it is the following method:

That is, preferably, the porous body is produced in a method for producing a porous body, comprising: forming a conductive coating layer on a resin molded body having a three-dimensional network structure to obtain a conductive resin molded body (a first step); plating the conductive resin molded body with a nickel-cobalt alloy to obtain a porous body precursor (a second step); and applying a heat treatment to the porous body precursor to incinerate a resin component in the conductive resin molded body and thus remove the resin component to obtain the porous body (a third step).

<First step>

Initially, a sheet of a resin molded body having a three-dimensional network structure (hereinafter also simply referred to as a "resin molded body") is prepared. Polyurethane resin, melamine resin, or the like can be used as the resin molded body. Furthermore, as a conductiveness imparting treatment for imparting conductiveness to the resin molded body, a conductive coating layer is formed on a surface of the resin molded body. The conductiveness imparting treatment can for example be the following method:

(1) applying a conductive paint containing carbon, conductive ceramic or similarly conductive particles and a binder to the resin molded body, impregnating the resin molded body with the conductive paint, or the like to include the conductive paint in a surface of the resin molded body;
(2) forming a layer of a conductive metal such as nickel and copper on a surface of the resin molded body by electroless plating; and
(3) forming a layer of a conductive metal on a surface of the resin molded body by vapor deposition or sputtering. A conductive resin molded body can thus be obtained.

<Second Step>

Subsequently, the conductive resin molded body is plated with a nickel-cobalt alloy to obtain a porous body precursor. While the conductive resin molded body can be plated with a nickel-cobalt alloy by electroless plating, electrolytic plating (so-called nickel-cobalt alloy electroplating) is preferably used from the viewpoint of efficiency. In nickel-cobalt alloy electroplating, the conductive resin molded body is used as a cathode.

Nickel-cobalt alloy electroplating can be done using a known plating bath. For example, a watt bath, a chloride bath, a sulfamic acid bath, or the like can be used. Nickel-cobalt alloy electroplating can be done with a plating bath having a composition, and under conditions, for example as follows:

(Bath composition)

Salt (aqueous solution): Nickel sulfamate and cobalt sulfamate (350 to 450 g/L as the total amount of Ni and Co) Note: The ratio in mass of Ni/Co is adjusted from Co/(Ni + Co) = 0.2 to 0.8 (preferably exceeding 0.4 and less than 0.6) by the ratio in mass of Co to the total mass of Ni and Co as desired.
Boric acid: 30-40g/L
pH: 4-4.5.

(Conditions for electrolysis)

Temperature: 40-60°C
Current density: 0.5 to 10 A/dm$^2$
Anode: Insoluble anode.

A porous body precursor having a conductive resin molded body plated with a nickel-cobalt alloy can thus be obtained. In addition, when adding a non-metallic element such as nitrogen, sulfur, fluorine, chlorine, and phosphorus, a variety of types of additives can be introduced into the plating bath to cause the porous body precursor to contain them. Examples of the variety of types of additives include, but are not limited to, sodium nitrate, sodium sulfate, sodium fluoride, sodium chloride, and sodium phosphate, and it is sufficient that each non-metallic element is included.

<Third Step>

Subsequently, the porous body precursor is subjected to a heat treatment to incinerate a resin component in the conductive resin molded body and remove the resin component to obtain the porous body. Thus a porous body having a framework having a three-dimensional network structure can be obtained. The heat treatment for removing the resin component may be done for example at a temperature of 600°C or higher in an atmosphere which is an oxidizing atmosphere such as air.

Herein, the porous body obtained in the above method has an average pore diameter substantially equal to that of the resin molded body. Accordingly, the average pore diameter of the resin molded body used to obtain the porous body may be selected, as appropriate, depending on the application of the porous body. As the porous body has a porosity ultimately determined by the amount (the apparent weight) of the plating metal, the apparent weight of the plating nickel-cobalt alloy may be selected as appropriate depending on the porosity required for the porous body as a final product. The resin molded body's porosity and average pore diameter are defined in the same manner as the above described framework's porosity and average pore diameter, and can be determined based on the above calculation formula with the term "framework" replaced with the term "resin molded body."

Through the above steps, the porous body according to the present embodiment can be produced. The porous body comprises a framework having a three-dimensional network structure, and the framework has a body including nickel and cobalt as constituent elements. Furthermore, the body of the framework includes the cobalt at a proportion in mass of 0.2 or more and 0.8 or less relative to a total mass of the nickel and the cobalt. The porous body can thus have appropriate strength as a current collector for an air electrode or a hydrogen electrode of a fuel cell. Furthermore, the porous body can have appropriate strength as a current collector for an air electrode of a steam electrolysis apparatus or a current collector for a hydrogen electrode of the steam electrolysis apparatus.

EXAMPLES

Hereinafter, the present invention will more specifically be described with reference to examples although the present invention is not limited thereto.

[Experiment 1]

<<Preparing the porous body>>

<Sample 1-1>

A porous body for Sample 1-1 was produced through the following procedure:

(First Step)

Initially, a 1.5 mm thick polyurethane resin sheet was prepared as a resin molded body having a three-dimensional network structure. When this polyurethane resin sheet's porosity and average pore diameter were determined based on the above formula, the porosity was 96% and the average pore diameter was 450 $\mu$m.

Subsequently, the resin molded body was impregnated with a conductive paint (slurry including carbon black), and then squeezed with a roll and dried to form a conductive coating layer on a surface of the resin molded body. A conductive resin molded body was thus obtained.

(Second Step)

Using the conductive resin molded body as a cathode, electrolytic plating was performed with a bath composition under conditions for electrolysis, as indicated below. As a result, 660 g/m$^2$ of metallic nickel was deposited on the conductive resin molded body, and a porous body precursor was thus obtained.

<Bath composition>

Salt (aqueous solution): Nickel sulfamate (that is, the ratio in mass of Co/(Ni + Co) is 0 (0% by mass)) and the amount of Ni is 400 g/L.
Boric acid: 35 g/L
pH: 4.5.

<Conditions for electrolysis>

Temperature: 50°C
Current density: 5 A/dm$^2$
Anode: Insoluble anode.

(Third Step)

The porous body precursor was subjected to a heat treatment to incinerate a resin component in the conductive resin molded body and remove the resin component to obtain a porous body for sample 1-1. The heat treatment for removing the resin component was done for example at a temperature of 650°C in an atmosphere of air.

<Sample 1-2>

The bath composition used in the second step was an aqueous solution of nickel sulfamate and cobalt sulfamate. The nickel sulfamate and the cobalt sulfamate included Ni and Co in an amount of 400 g/L in total with a ratio in mass of Co/(Ni + Co) set to 0.05 (5% by mass). Except for the above bath composition, a porous body of a nickel-cobalt alloy for Sample 1-2 was produced in the same manner as Sample 1-1.

<Sample 1-3>

The bath composition used in the second step was prepared such that nickel sulfamate and cobalt sulfamate included Ni and Co in an amount of 400 g/L in total. The ratio in mass of Co/(Ni + Co) was set to 0.15 (15% by mass). Except for that, a porous body of a nickel-cobalt alloy for Sample 1-3 was produced in the same manner as Sample 1-2.

<Sample 1-4>

The bath composition used in the second step was prepared such that nickel sulfamate and cobalt sulfamate included Ni and Co in an amount of 400 g/L in total. The ratio in mass of Co/(Ni + Co) was set to 0.21 (21% by mass). Except for that, a porous body of a nickel-cobalt alloy for Sample 1-4 was produced in the same manner as Sample 1-2.

<Sample 1-5>

The bath composition used in the second step was prepared such that nickel sulfamate and cobalt sulfamate included Ni and Co in an amount of 400 g/L in total. The ratio in mass of Co/(Ni + Co) was set to 0.25 (25% by mass). Except for that, a porous body of a nickel-cobalt alloy for Sample 1-5 was produced in the same manner as Sample 1-2.

<Sample 1-6>

The bath composition used in the second step was prepared such that nickel sulfamate and cobalt sulfamate included Ni and Co in an amount of 400 g/L in total. The ratio in mass of Co/(Ni + Co) was set to 0.35 (35% by mass). Except for that, a porous body of a nickel-cobalt alloy for Sample 1-6 was produced in the same manner as Sample 1-2.

<Sample 1-7>

The bath composition used in the second step was prepared such that nickel sulfamate and cobalt sulfamate included Ni and Co in an amount of 400 g/L in total. The ratio in mass of Co/(Ni + Co) was set to 0.41 (41% by mass). Except for that, a porous body of a nickel-cobalt alloy for Sample 1-7 was produced in the same manner as Sample 1-2.

<Sample 1-8>

The bath composition used in the second step was prepared such that nickel sulfamate and cobalt sulfamate included Ni and Co in an amount of 400 g/L in total. The ratio in mass of Co/(Ni + Co) was set to 0.45 (45% by mass). Except for that, a porous body of a nickel-cobalt alloy for Sample 1-8 was produced in the same manner as Sample 1-2.

<Sample 1-9>

The bath composition used in the second step was prepared such that nickel sulfamate and cobalt sulfamate included Ni and Co in an amount of 400 g/L in total. The ratio in mass of Co/(Ni + Co) was set to 0.5 (50% by mass). Except for that, a porous body of a nickel-cobalt alloy for Sample 1-9 was produced in the same manner as Sample 1-2.

<Sample 1-10>

The bath composition used in the second step was prepared such that nickel sulfamate and cobalt sulfamate included Ni and Co in an amount of 400 g/L in total. The ratio in mass of Co/(Ni + Co) was set to 0.59 (59% by mass). Except for that, a porous body of a nickel-cobalt alloy for Sample 1-10 was produced in the same manner as Sample 1-2.

<Sample 1-11>

The bath composition used in the second step was prepared such that nickel sulfamate and cobalt sulfamate included Ni and Co in an amount of 400 g/L in total. The ratio in mass of Co/(Ni + Co) was set to 0.65 (65% by mass). Except for that, a porous body of a nickel-cobalt alloy for Sample 1-11 was produced in the same manner as Sample 1-2.

<Sample 1-12>

The bath composition used in the second step was prepared such that nickel sulfamate and cobalt sulfamate included Ni and Co in an amount of 400 g/L in total. The ratio in mass of Co/(Ni + Co) was set to 0.75 (75% by mass). Except for that, a porous body of a nickel-cobalt alloy for Sample 1-12 was produced in the same manner as Sample 1-2.

<Sample 1-13>

The bath composition used in the second step was prepared such that nickel sulfamate and cobalt sulfamate included Ni and Co in an amount of 400 g/L in total. The ratio in mass of Co/(Ni + Co) was set to 0.85 (85% by mass). Except for that, a porous body of a nickel-cobalt alloy for Sample 1-13 was produced in the same manner as Sample 1-2.

<Sample 1-14>

The bath composition used in the second step was prepared such that nickel sulfamate and cobalt sulfamate included Ni and Co in an amount of 400 g/L in total. The ratio in mass of Co/(Ni + Co) was set to 0.95 (95% by mass). Except for that, a porous body of a nickel-cobalt alloy for Sample 1-14 was produced in the same manner as Sample 1-2.

<Sample 1-15>

The bath composition used in the second step was an aqueous solution of cobalt sulfamate. That is, the ratio in mass of Co/(Ni + Co) was 1 (i.e., 100% by mass). The cobalt sulfamate included Co in an amount of 400 g/L. Except for the above bath composition, a porous body of metallic cobalt for Sample 1-15 was produced in the same manner as Sample 1-1.

Porous bodies for samples 1-1 to 1-15 were thus produced through the above procedure. Note that Samples 1-4 to 1-12 correspond to Examples, and Samples 1-1 to 1-3 and Samples 1-13 to 1-15 correspond to Comparative Examples.

<<Evaluating performance of porous body>>

<Analyzing physical property of porous body>

The porous bodies for samples 1-1 to 1-15 were each examined for a proportion in mass of cobalt in the body of the framework of the porous body relative to a total mass of nickel and cobalt in the body of the framework of the porous body with an EDX device accompanying the SEM (an SEM part: trade name "SUPRA35VP" manufactured by Carl Zeiss Microscopy Co., Ltd., and an EDX part: trade name "octane super" manufactured by AMETEK, Inc.). Specifically, initially, the porous body of each sample was cut. Subsequently, the cut porous body had its framework observed in cross section with the EDX device to detect each element, and the cobalt's proportion in mass was determined based on the element's atomic percentage. As a result, the proportion in mass of cobalt in the framework body of the porous body of each of samples 1-1 to 1-15 relative to the total mass of nickel and cobalt in the framework matched the proportion in mass of cobalt contained in the plating bath used to prepare the porous body relative to the total mass of nickel and cobalt contained in the plating bath (i.e., a ratio in mass of Co/(Ni + Co)).

Further, the above calculation formula was used to determine the average pore diameter and porosity of the framework of each of the porous bodies of Samples 1-1 to 1-15. As a result, the average pore diameter and porosity matched the resin molded body's porosity and average pore diameter, and the porosity was 96% and the average pore diameter was 450 μm.Further, the porous bodies of Samples 1-1 to 1-15 had a thickness of 1.4 mm. In each of the porous bodies of Samples 1-1 to 1-15, the total apparent weight of nickel and cobalt was 660 g/m$^2$, as has been set forth above.

<Evaluation for power generation>

Further, the porous bodies of samples 1-1 to 1-15 as a current collector for an air electrode, and a YSZ cell manufactured by Elcogen AS (see Fig. 9) were together used to fabricate fuel cells (see Fig. 8), and the fuel cells were evaluated for power generation by the following items:

(Evaluation of Fracture of Solid Electrolyte)

Fracture of solid electrolyte was evaluated through the following procedure. That is, the YSZ cell was visually observed for whether cracking and crack, and hence fracture were present or absent. A result thereof is shown in Table 1.

(Evaluation of Initial OCV)

The fabricated fuel cells were each had its open circuit voltage (initial OCV) measured with a commercially available voltmeter immediately after fabricating the fuel cell was completed. A result thereof is shown in Table 1.

(Evaluation of fracture of framework in current collector for air electrode after 1,000 hours of power generation)

The fabricated fuel cells each had its current collector for an air electrode observed with an SEM after 1,000 hours of power generation, and whether the framework in the current collector for the air electrode had fracture was evaluated based on the following criteria. A result thereof is shown in Table 1.

Criteria for Evaluation

A: No cracking was observed in the framework.
B: Slight cracking was observed in the framework.
C: The framework was partially broken.

(Evaluation of an operating voltage keeping ratio after 1,000 hours of power generation)

For each fabricated fuel cell, an initial operating voltage V1 and an operating voltage V2 after 1,000 hours were determined, and a formula indicated below was used to obtain an operating voltage keeping ratio after 1,000 hours, and a result thereof is shown in Table 1 below. In Table 1, "-" indicates that no operating voltage keeping ratio was measurable. Operating voltage V1 was measured three times and a result thereof was averaged to serve as operating voltage V1, and so was operating voltage 2.

$$\text{Operating voltage keeping ratio (\%) after 1,000 hours of power generation} = (V2/V1) \times 100$$

(Evaluation of proportion of oxygen contained in porous body after 1,000 hours of power generation)

A proportion of oxygen contained in a porous body after 1,000 hours of power generation was determined through the following procedure. Initially, each fabricated fuel cell had the porous body (or a current collector for an air electrode) observed with an SEM after 1,000 hours of power generation to obtain an observed image (an electron microscopic image) of a cross section of the framework of the porous body cut. The obtained observed image was analyzed using an EDX device (trade name "octane super" manufactured by AMETEK, Inc.) accompanying the SEM to determine a proportion of oxygen contained in the porous body. A result thereof is shown in Table 1.

Table 1

| sample Nos. | proportion in mass of Co in NiCo | fracture of solid electrolyte | initial OCV | fracture of framework of porous body after 1,000 hours | operating voltage keeping ratio after 1,000 hours (%) | proportion of oxygen contained in porous body after 1,000 hours (wt%) |
|---|---|---|---|---|---|---|
| 1 - 1 | 0 | absent | 1.08 | C | 60 | 20 |
| 1 - 2 | 0.05 | absent | 1.08 | C | 72 | 28 |
| 1 - 3 | 0.15 | absent | 1.08 | C | 80 | 26 |
| 1 - 4 | 0.21 | absent | 1.08 | B | 91 | 25 |
| 1 - 5 | 0.25 | absent | 1.08 | B | 94 | 27 |
| 1 - 6 | 0.35 | absent | 1.08 | B | 95 | 26 |
| 1 - 7 | 0.41 | absent | 1.08 | A | 87 | 28 |
| 1 - 8 | 0.45 | absent | 1.08 | A | 86 | 25 |
| 1 - 9 | 0.50 | absent | 1.08 | A | 88 | 26 |
| 1 - 10 | 0.59 | absent | 1.08 | A | 88 | 27 |
| 1 - 11 | 0.65 | absent | 1.08 | B | 92 | 27 |
| 1 - 12 | 0.75 | absent | 1.08 | B | 93 | 25 |
| 1 - 13 | 0.85 | present | 0.83 | B | - | 31 |
| 1 - 14 | 0.95 | present | 0.82 | B | - | 29 |
| 1 - 15 | 1 | present | 0.8 | B | - | 26 |

<Discussions>

According to Table 1, the fuel cells including as the current collector for the air electrode the porous bodies of Samples 1-13 to 1-15 in which the framework had a body including nickel and cobalt with the cobalt included at a proportion in mass exceeding 0.8 relative to a total mass of the nickel and the cobalt in the body of the framework, had fracture observed in the solid electrolyte, as their porous bodies were excessively hard. In contrast, the fuel cells including as the current collector for the air electrode the porous bodies of Samples 1-1 to 1-12 in which the cobalt was included at a proportion in mass of 0.8 or less had no fracture observed in the solid electrolyte.

Furthermore, the fuel cells including as the current collector for the air electrode the porous bodies of Samples 1-1 to 1-3 in which the framework had a body including nickel and cobalt with the cobalt included at a proportion in mass of less than 0.2 relative to a total mass of the nickel and the cobalt in the body of the framework, had their porous bodies with their frameworks partially broken after 1,000 hours of power generation. In contrast, the fuel cells including as the current collector for the air electrode the porous bodies of Samples 1-4 to 1-15 in which the cobalt was included at a proportion in mass of 0.2 or more had no cracking observed in the framework of the porous body even after 1,000 hours of power generation.

With the above considered, it has been found that the porous bodies of Samples 1-4 to 1-12 in which the framework has a body including nickel and cobalt with the cobalt included at a proportion in mass of 0.2 or more and 0.8 or less relative to a total mass of the nickel and the cobalt in the body of the framework are porous bodies having appropriate strength as a current collector for an air electrode of a fuel cell or a current collector for a hydrogen electrode of a fuel cell, as compared with the porous bodies of Samples 1-1 to 1-3 and 1-13 to 1-15 which do not satisfy the above proportion in mass.

Furthermore, it has been found that the fuel cells including as an electrode the porous bodies of Samples 1-4 to 1-12 in which the framework has a body including nickel and cobalt with the cobalt included at a proportion in mass of 0.2 or more and 0.8 or less relative to a total mass of the nickel and the cobalt in the body of the framework provide an operating voltage keeping ratio exceeding 80% after 1,000 hours of power generation and are thus satisfactory.

[Experiment 2]

Hereinafter, examples in which nitrogen, sulfur, phosphorus, fluorine, and chlorine are added as a non-metallic element will be described.

<<Preparing the porous body>>

<Sample 2-1 to sample 2-4>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium nitrate was added to the plating bath to prepare porous bodies for Samples 2-1 to 2-4 which contained nitrogen as a non-metallic element in amounts of 3 ppm, 5 ppm, 9,000 ppm, and 11,000 ppm.

<Sample 2-5 to Sample 2-8>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium nitrate was added to the plating bath to prepare porous bodies for Samples 2-5 to 2-8 which contained nitrogen as a non-metallic element in amounts of 3 ppm, 5 ppm, 9,000 ppm, and 11,000 ppm.

<Sample 3-1 to Sample 3-4>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium sulfate was added to the plating bath to prepare porous bodies for Samples 3-1 to 3-4 which contained sulfur as a non-metallic element in amounts of 3 ppm, 5 ppm, 9,000 ppm, and 11,000 ppm.

<Sample 3-5 to Sample 3-8>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium sulfate was added to the plating bath to prepare porous bodies for Samples 3-5 to 3-8 which contained sulfur as a non-metallic element in amounts of 3 ppm, 5 ppm, 9,000 ppm, and 11,000 ppm.

<Sample 4-1 to Sample 4-4>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium phosphate was added to the plating bath to prepare porous bodies for Samples 4-1 to 4-4 which contained phosphorus as a non-metallic element in amounts of 3 ppm, 5 ppm, 50,000 ppm, and 55,000 ppm.

<Sample 4-5 to Sample 4-8>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium phosphate was added to the plating bath to prepare porous bodies for Samples 4-5 to 4-8 which contained phosphorus as a non-metallic element in amounts of 3 ppm, 5 ppm, 50,000 ppm, and 55,000 ppm.

<Sample 5-1 to Sample 5-4>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium fluoride was added to the plating bath to prepare porous bodies for Samples 5-1 to 5-4 which contained fluorine as a non-metallic element in amounts of 3 ppm, 5 ppm, 9,000 ppm, and 11,000 ppm.

<Sample 5-5 to Sample 5-8>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium fluoride was added to the plating bath to prepare porous bodies for Samples 5-5 to 5-8 which contained fluorine as a non-metallic element in amounts of 3 ppm, 5 ppm, 9,000 ppm, and 11,000 ppm.

<Sample 6-1 to sample 6-4>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium chloride was added to the plating bath to prepare porous bodies for Samples 6-1 to 6-4 which contained chlorine as a non-metallic element in amounts of 3 ppm, 5 ppm, 9,000 ppm, and 11,000 ppm.

<Sample 6-5 to Sample 6-8>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium chloride was added to the plating bath to prepare porous bodies for Samples 6-5 to 6-8 which contained chlorine as a non-metallic element in amounts of 3 ppm, 5 ppm, 9,000 ppm, and 11,000 ppm.

<Sample 7-1>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium chloride and sodium phosphate were added to the plating bath to prepare a porous body for Sample 7-1 which contained chlorine and phosphorus as non-metallic elements in amounts of 2 ppm and 1 ppm, respectively. That is, the porous body contained the non-metallic elements at a proportion of 3 ppm in total.

<Sample 7-2>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium chloride and sodium phosphate were added to the plating bath to prepare a porous body for Sample 7-2 which contained chlorine and phosphorus as non-metallic elements in amounts of 2 ppm and 3 ppm, respectively. That is, the porous body contained the non-metallic elements at a proportion of 5 ppm in total.

<Sample 7-3>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium nitrate and sodium sulfate were added to the plating bath to prepare a porous body for Sample 7-3 which contained nitrogen and sulfur as non-metallic elements in amounts of 2 ppm and 3 ppm, respectively. That is, the porous body contained the non-metallic elements at a proportion of 5 ppm in total.

<Sample 7-4>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium fluoride, sodium phosphate and sodium sulfate were added to the plating bath to prepare a porous body for Sample 7-4 which contained fluorine, phosphorus, and sulfur as non-metallic elements in amounts of 10,000 ppm, 30,000 ppm, and 10,000 ppm, respectively. That is, the porous body contained the non-metallic elements at a proportion of 50,000 ppm in total.

<Sample 7-5>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.42. Further, sodium fluoride, sodium phosphate and sodium sulfate were added to the plating bath to prepare a porous body for Sample 7-5 which contained fluorine, phosphorus, and sulfur as non-metallic elements in amounts of 5,000 ppm, 30,000 ppm, and 20,000 ppm, respectively. That is, the porous body contained the non-metallic elements at a proportion of 55,000 ppm in total.

<Sample 7-6>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium chloride and sodium phosphate were added to the plating bath to prepare a porous body for Sample 7-6 which contained chlorine and phosphorus as non-metallic elements in amounts of 2 ppm and 1 ppm, respectively. That is, the porous body contained the non-metallic elements at a proportion of 3 ppm in total.

<Sample 7-7>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium chloride and sodium phosphate were added to the plating bath to prepare a porous body for Sample 7-7 which contained chlorine and phosphorus as non-metallic elements in amounts of 2 ppm and 3 ppm, respectively. That is, the porous body contained the non-metallic elements at a proportion of 5 ppm in total.

<Sample 7-8>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium nitrate and sodium sulfate were added to the plating bath to prepare a porous body for Sample 7-8 which contained nitrogen and sulfur as non-metallic elements in amounts of 2 ppm and 3 ppm, respectively. That is, the porous body contained the non-metallic elements at a proportion of 5 ppm in total.

<Sample 7-9>

The same manner as Sample 1-1 was used except that, for the bath composition used in the second step of Experiment 1, nickel sulfamate and cobalt sulfamate included Ni and Co in an amount of 400 g/L in total, with a ratio in mass of Co/(Ni + Co) set to 0.58. Further, sodium fluoride, sodium phosphate and sodium sulfate were added to the plating bath to prepare a porous body for Sample 7-9 which contained fluorine, phosphorus, and sulfur as non-metallic elements in amounts of 10,000 ppm, 45,000 ppm, and 5,000 ppm, respectively. That is, the porous body contained the non-metallic elements at a proportion of 60,000 ppm in total.

<<Evaluating performance of porous body>>

<Analyzing physical property of porous body>

The porous bodies of samples 2-1 to 7-9 obtained in the above method were each examined for a proportion in mass of cobalt in the body of the framework of the porous body relative to a total mass of nickel and cobalt in the body of the framework of the porous body with an EDX device accompanying the SEM (an SEM part: trade name "SUPRA35VP" manufactured by Carl Zeiss Microscopy Co., Ltd., and an EDX part: trade name "octane super" manufactured by AMETEK, Inc.). Specifically, initially, the porous body of each sample was cut. Subsequently, the cut porous body had its framework observed in cross section with the EDX device to detect each element, and the cobalt's proportion in mass was determined based on the element's atomic percentage. As a result, the proportion in mass of cobalt in the framework body of the porous body of each of samples 2-1 to 7-9 relative to the total mass of nickel and cobalt in the framework body of the porous body of the sample matched the proportion in mass of cobalt contained in the plating bath used to prepare the porous body relative to the total mass of nickel and cobalt contained in the plating bath (i.e., a ratio in mass of Co/(Ni + Co)). Furthermore, a proportion of a non-metallic element contained in the framework body of the porous body of each of Samples 2-1 to 7-9 was also similarly examined using the EDX device accompanying the SEM.

Further, the above calculation formula was used to determine the average pore diameter and porosity of the framework of each of the porous bodies of Samples 2-1 to 7-9. As a result, the average pore diameter and porosity matched the resin molded body's porosity and average pore diameter, and the porosity was 96% and the average pore diameter was 450 $\mu$m. Further, the porous bodies of Samples 2-1 to 7-9 had a thickness of 1.4 mm. In each of the porous bodies of Samples 2-1 to 7-9, the total apparent weight of nickel and cobalt was 660 g/m$^2$, as has been set forth above.

<Evaluation for power generation>

Further, the porous bodies of samples 2-1 to 7-9 were used as a current collector for an air electrode together with a YSZ cell manufactured by Elcogen AS (see Fig. 9) to fabricate fuel cells (see Fig. 8), and the fuel cells were evaluated for power generation by the following items:

(Evaluation of Fracture of Solid Electrolyte)

Fracture of solid electrolyte was evaluated through the following procedure. That is, the YSZ cell was visually observed for whether cracking and crack, and hence fracture are present or absent. A result thereof is shown in tables 2 to 4.

(Evaluation of operating voltage keeping ratio after 1,000 hours of power generation)

For each fabricated fuel cell, initial operating voltage V1 and operating voltage V2 after 1,000 hours were determined, and a formula indicated below was used to obtain an operating voltage keeping ratio after 1,000 hours, and a result thereof is shown in tables 2 to 4 below. In tables 2 to 4, "-" indicates that no operating voltage keeping ratio was measurable. Operating voltage V1 was measured three times and a result thereof was averaged to serve as operating voltage V1, and so was operating voltage 2.

$$\text{Operating voltage keeping ratio (\%) after 1,000 hours of power generation} = (V2/V1) \times 100$$

Table 2

| sample Nos. | Proportion in mass of Co in NiCo | proportion of non-metallic element contained | fracture of solid electrolyte | operating voltage keeping ratio after 1,000 hours (%) |
|---|---|---|---|---|
| 2 - 1 | 0.42 | N (3 ppm) | absent | 88 |
| 2 - 2 | 0.42 | N (5 ppm) | absent | 92 |
| 2 - 3 | 0.42 | N (9000 ppm) | absent | 93 |
| 2 - 4 | 0.42 | N (11000 ppm) | present | - |
| 2 - 5 | 0.58 | N (3 ppm) | absent | 88 |
| 2 - 6 | 0.58 | N (5 ppm) | absent | 91 |
| 2 - 7 | 0.58 | N (9000 ppm) | absent | 94 |
| 2 - 8 | 0.58 | N (11000 ppm) | present | - |
| 3 -1 | 0.42 | S (3 ppm) | absent | 89 |

(continued)

| sample Nos. | Proportion in mass of Co in NiCo | proportion of non-metallic element contained | fracture of solid electrolyte | operating voltage keeping ratio after 1,000 hours (%) |
|---|---|---|---|---|
| 3 - 2 | 0.42 | S (5 ppm) | absent | 92 |
| 3 - 3 | 0.42 | S (9000 ppm) | absent | 94 |
| 3 - 4 | 0.42 | S (11000 ppm) | present | - |
| 3 - 5 | 0.58 | S (3 ppm) | absent | 89 |
| 3 - 6 | 0.58 | S (5 ppm) | absent | 93 |
| 3 - 7 | 0.58 | S (9000 ppm) | absent | 93 |
| 3 - 8 | 0.58 | S (11000 ppm) | present | - |

Table 3

| sample Nos. | Proportion in mass of Co in NiCo | proportion of non-metallic element contained | fracture of solid electrolyte | operating voltage keeping ratio after 1,000 hours (%) |
|---|---|---|---|---|
| 4 - 1 | 0.42 | P (3 ppm) | absent | 89 |
| 4 - 2 | 0.42 | P (5 ppm) | absent | 94 |
| 4 - 3 | 0.42 | P (50000 ppm) | absent | 93 |
| 4 - 4 | 0.42 | P (55000 ppm) | present | - |
| 4 - 5 | 0.58 | P (3 ppm) | absent | 88 |
| 4 - 6 | 0.58 | P (5 ppm) | absent | 91 |
| 4 - 7 | 0.58 | P (50000 ppm) | absent | 94 |
| 4 - 8 | 0.58 | P (55000 ppm) | present | - |
| 5 - 1 | 0.42 | F (3 ppm) | absent | 88 |
| 5 - 2 | 0.42 | F (5 ppm) | absent | 92 |
| 5 - 3 | 0.42 | F (9000 ppm) | absent | 91 |
| 5 - 4 | 0.42 | F (11000 ppm) | present | - |
| 5 - 5 | 0.58 | F (3 ppm) | absent | 87 |
| 5 - 6 | 0.58 | F (5 ppm) | absent | 92 |
| 5 - 7 | 0.58 | F (9000 ppm) | absent | 94 |
| 5 - 8 | 0.58 | F (11000 ppm) | present | - |

Table 4

| sample Nos. | Proportion in mass of Co in NiCo | proportion of non-metallic element contained | fracture of solid electrolyte | operating voltage keeping ratio after 1,000 hours (%) |
|---|---|---|---|---|
| 6 - 1 | 0.42 | Cl (3 ppm) | absent | 87 |
| 6 - 2 | 0.42 | Cl (5 ppm) | absent | 90 |
| 6 - 3 | 0.42 | Cl (9000 ppm) | absent | 93 |
| 6 - 4 | 0.42 | Cl (11000 ppm) | present | - |

(continued)

| sample Nos. | Proportion in mass of Co in NiCo | proportion of non-metallic element contained | fracture of solid electrolyte | operating voltage keeping ratio after 1,000 hours (%) |
|---|---|---|---|---|
| 6 - 5 | 0.58 | CI (3 ppm) | absent | 88 |
| 6 - 6 | 0.58 | CI (5 ppm) | absent | 91 |
| 6 - 7 | 0.58 | CI (9000 ppm) | absent | 91 |
| 6 - 8 | 0.58 | CI (11000 ppm) | present | - |
| 7 - 1 | 0.42 | CI (2 ppm), P (1 ppm) | absent | 87 |
| 7 - 2 | 0.42 | CI (2 ppm), P (3 ppm) | absent | 92 |
| 7 - 3 | 0.42 | N (2 ppm), S (3 ppm) | absent | 93 |
| 7 - 4 | 0.42 | F (10000 ppm) P (30000 ppm) S (10000 ppm) | absent | 94 |
| 7 - 5 | 0.42 | F (5000 ppm) P (30000 ppm) S (20000 ppm) | present | - |
| 7 - 6 | 0.58 | CI (2 ppm), P (1 ppm) | absent | 86 |
| 7 - 7 | 0.58 | CI (2 ppm), P (3 ppm) | absent | 91 |
| 7 - 8 | 0.58 | N (2 ppm), S (3 ppm) | absent | 92 |
| 7 - 9 | 0.58 | F (10000 ppm) P (45000 ppm) S (5000 ppm) | present | - |

<Discussions>

According to a result of Tables 2 to 4, it has been found that there is no fracture observed in a solid electrolyte included in a fuel cell when the non-metallic element is at least one selected from the group consisting of nitrogen, sulfur, fluorine and chlorine and the porous body has a framework body with the non-metallic element contained therein at a proportion in a range of at least 5 ppm or more and 10,000 ppm or less. Further, it has been found that the fuel cell has an operating voltage keeping ratio exceeding 90% after 1,000 hours of power generation and is thus satisfactory.

Furthermore, according to Table 3, it has been found that there is no fracture observed in a solid electrolyte included in a fuel cell when the non-metallic element is phosphorus and the porous body has a framework body with the phosphorus contained therein at a proportion in a range of at least 5 ppm or more and 50,000 ppm or less. Further, it has been found that the fuel cell has an operating voltage keeping ratio exceeding 90% after 1,000 hours of power generation and is thus satisfactory.

Furthermore, according to samples 7-1 to 7-9 indicated in Table 4, it has been found that there is no fracture observed in a solid electrolyte included in a fuel cell when a plurality of non-metallic elements are included, and contained at a proportion in a range of at least 5 ppm or more and 50,000 ppm or less in total. Further, it has been found that the fuel cell has an operating voltage keeping ratio exceeding 90% after 1,000 hours of power generation and is thus satisfactory.

Although embodiments and examples of the present invention have been described as described above, it has also been planned from the beginning to appropriately combine the configurations of the above-described embodiments and examples.

The embodiments and examples disclosed herein are illustrative in any respects and should not be construed as being restrictive. The scope of the present invention is defined by the terms of the claims, rather than the above-described embodiments and examples, and is intended to include any modifications within the scope and meaning equivalent to the claims.

REFERENCE SIGNS LIST

1 rib, 2 node, 10 frame, 11 framework body, 12 framework, 13 inner portion, 14 pore, 20 cell, 30 three-dimensional network structure, 100 cell for fuel cell, 102 air electrode, 104 intermediate layer, 106 electrolyte layer, 108 hydrogen electrode, 110 current collector for hydrogen electrode, 112 first interconnector, 114 fuel channel, 120 current collector for air electrode, 122 second interconnector, 124 oxidant channel, 150 fuel cell, 200 cell for steam electrolysis apparatus, 202 air electrode, 204 intermediate layer, 206 electrolyte layer, 208 hydrogen electrode, 210 current collector for hydrogen electrode, 212 first interconnector, 214 hydrogen channel, 220 current collector for air electrode, 222 second interconnector, 224 steam channel, 250 steam electrolysis apparatus, A virtual plane.

**Claims**

1. A porous body comprising a framework having a three-dimensional network structure,
   the framework having a body including nickel and cobalt as constituent elements,
   the body of the framework including the cobalt at a proportion in mass of 0.2 or more and 0.8 or less relative to a total mass of the nickel and the cobalt.

2. The porous body according to claim 1, wherein the body of the framework includes the cobalt at a proportion in mass exceeding 0.4 and less than 0.6 relative to the total mass of the nickel and the cobalt.

3. The porous body according to claim 1 or 2, wherein the body of the framework further includes at least one non-metallic element selected from the group consisting of nitrogen, sulfur, fluorine, and chlorine as a constituent element, and the non-metallic element is contained at a proportion of 5 ppm or more and 10,000 ppm or less in total with respect to the body of the framework.

4. The porous body according to claim 1 or 2, wherein the body of the framework further includes phosphorus as a constituent element, and the phosphorus is contained at a proportion of 5 ppm or more and 50,000 ppm or less with respect to the body of the framework.

5. The porous body according to claim 1 or 2, wherein the body of the framework further includes at least two non-metallic elements selected from the group consisting of nitrogen, sulfur, fluorine, chlorine and phosphorus as constituent elements, and the non-metallic elements are contained at a proportion of 5 ppm or more and 50,000 ppm or less in total with respect to the body of the framework.

6. The porous body according to any one of claims 1 to 5, wherein the body of the framework further includes oxygen as a constituent element.

7. The porous body according to claim 6, wherein the oxygen is included in the body of the framework in an amount of 0.1% by mass or more and 35% by mass or less.

8. The porous body according to claim 6 or 7, wherein the body of the framework includes a spinel-type oxide.

9. The porous body according to any one of claims 1 to 8, wherein when the body of the framework is observed in cross section at a magnification of 3,000 times to obtain an observed image the observed image presents in any area 10 $\mu$m square thereof five or less voids each having a longer diameter of 1 $\mu$m or more.

10. The porous body according to any one of claims 1 to 9, wherein the framework is hollow.

11. The porous body according to any one of claims 1 to 10, having a sheet-shaped external appearance and a thickness of 0.2 mm or more and 2 mm or less.

12. A fuel cell comprising a current collector for an air electrode and a current collector for a hydrogen electrode, at least one of the current collector for the air electrode or the current collector for the hydrogen electrode including the porous body according to any one of claims 1 to 11.

13. A steam electrolysis apparatus comprising a current collector for an air electrode and a current collector for a hydrogen electrode, at least one of the current collector for the air electrode or the current collector for the hydrogen electrode including the porous body according to any one of claims 1 to 11.

FIG.1

14

13

A

A

10

11

12

FIG.2

11

12

13

FIG.3A

FIG.3B

FIG.4A

FIG.4B

FIG.5

FIG.6

FIG.7

FIG.8

FIG.9

100

| LSC (OXIDE OF LaSrCo) | 102 |
| GDC(Gd DOPED Ce OXIDE) | 104 |
| YSZ (Y DOPED Zr OXIDE) | 106 |
| YSZ+NiO$_2$MIXTURE | 108 |

FIG.10

FIG.11

200

| LSC (OXIDE OF LaSrCo) | 202 |
| GDC(Gd DOPED Ce OXIDE) | 204 |
| YSZ (Y DOPED Zr OXIDE) | 206 |
| YSZ+NiO$_2$MIXTURE | 208 |

## INTERNATIONAL SEARCH REPORT

| International application No. |
|---|
| PCT/JP2020/016533 |

### A. CLASSIFICATION OF SUBJECT MATTER

C22C 1/08(2006.01)i; C22C 19/03(2006.01)i; C22C 19/07(2006.01)i; C25B 11/03(2006.01)i; H01M 8/0232(2016.01)i; H01M 8/0247(2016.01)i
FI: C22C1/08 D; C22C19/03 M; C22C19/07 M; C25B11/03; H01M8/0232; H01M8/0247

According to International Patent Classification (IPC) or to both national classification and IPC

### B. FIELDS SEARCHED

Minimum documentation searched (classification system followed by classification symbols)
C22C1/08; C22C19/03; C22C19/07; C25B11/03; H01M8/0232; H01M8/0247

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-507452 A (RESEARCH INSTITUTE OF INDUSTRIAL SCIENCE & TECHNOLOGY) 16.03.2017 (2017-03-16) paragraphs [0022]-[0063] | 1-12<br>4-5, 13 |
| X<br>Y | JP 2005-56619 A (MITSUBISHI MATERIALS CORP.) 03.03.2005 (2005-03-03) paragraphs [0010]-[0012], fig. 6 | 1-12<br>4-5, 13 |
| Y | WO 2017/022542 A1 (SUMITOMO ELECTRIC INDUSTRIES, LTD.) 09.02.2017 (2017-02-09) paragraphs [0028]-[0029] | 4-5 |
| Y | JP 2018-147583 A (SUMITOMO ELECTRIC INDUSTRIES, LTD.) 20.09.2018 (2018-09-20) paragraphs [0049], [0056] | 13 |
| A | WO 2019/012948 A1 (SUMITOMO ELECTRIC INDUSTRIES, LTD.) 17.01.2019 (2019-01-17) | 1-13 |
| A | WO 2017/201186 A1 (UNIVERSITY OF HOUSTON SYSTEM) 23.11.2017 (2017-11-23) | 1-13 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 July 2020 (02.07.2020) | 14 July 2020 (14.07.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2020/016533

C (Continuation).  DOCUMENTS CONSIDERED TO BE RELEVANT

| Category* | Citation of document, with indication, where appropriate, of the relevant passages | Relevant to claim No. |
|---|---|---|
| P, X | WO 2019/244480 A1 (SUMITOMO ELECTRIC INDUSTRIES, LTD.) 26.12.2019 (2019-12-26) claims 1-12 | 1-13 |

Form PCT/ISA/210 (continuation of second sheet) (January 2015)

INTERNATIONAL SEARCH REPORT

Information on patent family members

International application No.

PCT/JP2020/016533

| Patent Documents referred in the Report | Publication Date | Patent Family | Publication Date |
|---|---|---|---|
| JP 2017-507452 A | 16 Mar. 2017 | US 2017/0005345 A1 paragraphs [0034]-[0074] CN 106030878 A EP 3089250 A1 KR 10-2015-0076408 A1 WO 2015/099449 A1 | |
| JP 2005-56619 A | 03 Mar. 2005 | (Family: none) | |
| WO 2017/022542 A1 | 09 Feb. 2017 | US 2018/0219232 A1 paragraphs [0061]-[0063] CN 107925092 A EP 3333947 A1 JP 2017-33917 A KR 10-2018-0037174 A | |
| JP 2018-147583 A | 20 Sep. 2018 | (Family: none) | |
| WO 2019/012948 A1 | 17 Jan. 2019 | (Family: none) | |
| WO 2017/201186 A1 | 23 Nov. 2017 | CN 109311000 A EP 3458191 A1 US 2019/0218074 A1 | |
| WO 2019/244480 A1 | 26 Dec. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019096107 A
- JP 11154517 A

- JP 2012132083 A
- JP 2012149282 A